(19) Europäisches Patentamt
European Patent Office
Office européen des brevets

(11) **EP 0 780 830 A2**

(12) **EUROPEAN PATENT APPLICATION**

(43) Date of publication:
**25.06.1997 Bulletin 1997/26**

(51) Int Cl.6: **G10L 5/06**, G10L 7/08, G10L 9/06

(21) Application number: **96309258.0**

(22) Date of filing: **18.12.1996**

(84) Designated Contracting States:
**DE ES FR GB IT**

(30) Priority: **22.12.1995 GB 9526334**

(71) Applicant: **NCR INTERNATIONAL INC.
Dayton, Ohio 45479 (US)**

(72) Inventors:
- **Hannah, Malcolm I.
  Dundee DD5 6LU (GB)**
- **Sapeluk, Andrew T.
  Dundee DD3 0LA (GB)**
- **Damper, Robert I.
  Eastleigh, Hampshire SO53 2AB (GB)**
- **Roger, Ian M.
  DD3 0LA (GB)**

(74) Representative: **Robinson, Robert George
International Intellectual Property Department,
NCR Limited,
206 Marylebone Road
London NW1 6LY (GB)**

(54) **Speaker verification system**

(57) In a speaker verification system, a method of generating reference data includes analyzing a plurality of example utterances of a speaker to be enrolled in the system to provide a matrix of averaged cepstral coefficients representing the utterances. This matrix is compared with matrices of cepstral coefficients derived from test utterances of the speaker and of other speakers to determine, by use of a genetic algorithm process, the coefficients of a weighting vector to be used in the comparison. The reference data, including the matrix of average cepstral coefficients and the coefficients of the genetic algorithm derived weighting vector are recorded on a user's card for subsequent use by the speaker when desiring service from a self-service terminal.

## Description

This invention relates to speaker verification systems.

Speaker verification systems typically involve the preparation of reference data derived from repeated utterances of a password, for example, by a speaker who is to be enrolled in the system. This reference data is then recorded, for example on a user's card. Subsequently, when the user desires to initiate a transaction at a terminal, such as a cash dispensing transaction at an automated teller machine (ATM), for example, the user inserts his or her card into the terminal and then speaks the password, which is processed in the terminal to produce data in a form suitable for a comparison operation with the recorded reference data on the user's card. Depending on the result of the comparison, typically involving a relationship with a threshold value, the spoken password is verified, or not, as a true utterance of the user.

It is an object of the present invention to provide a speaker verification system which enables an efficient verification of a speaker to be achieved.

According to one aspect of the present invention, there is provided a method of generating reference data for use in a speaker verification system, characterized by the steps of: analyzing a plurality of example utterances of a speaker to be enrolled in said speaker verification system to provide averaged utterance data representing said example utterances, analyzing a plurality of test utterances to provide test utterance data representing said test utterances, and utilizing a genetic algorithm to determine a weighting vector for use in calculating distance measurements between said test utterance data and said averaged utterance data.

According to another aspect of the present invention, there is provided a method of verifying a speaker, utilizing reference data generated by a method according to the immediately preceding paragraph, characterized by the steps of comparing a trial utterance data derived from a trial utterance of said speaker with said averaged utterance data, using said weighting vector derived by a genetic algorithm, thereby determining a trial distance measurement between said trial utterance and said averaged utterance data, and comparing said trial distance measurement with a predetermined threshold value.

One embodiment of the present invention will now be described by way of example, with reference to the accompanying drawings, in which:-

Fig.1 is a simplified block diagram of apparatus for generating a template for a speaker;
Fig.2 is a flowchart illustrating the operation of the apparatus shown in Fig.1, for generating a weighting vector, using a genetic algorithm;
Fig.3 is a flowchart illustrating in more detail a portion of the flowchart shown in Fig.2, for generating a set of cepstral coefficients representing an utterance;
Fig.4A to 4C are plots helpful in understanding the flowchart described with reference to Fig.3;
Fig.5 is a diagram illustrating the relationship of matrices of cepstral coefficients for a speaker template and a test utterance;
Figs.6A and 6B are plots showing distance measurement against frequency of occurrence for true and impostor distributions;
Fig.7 is a simplified block diagram of apparatus in which the utterance of a speaker is verified against reference data; and
Fig.8 is a flowchart illustrating the operation of the apparatus shown in Fig.7 for speaker verification.

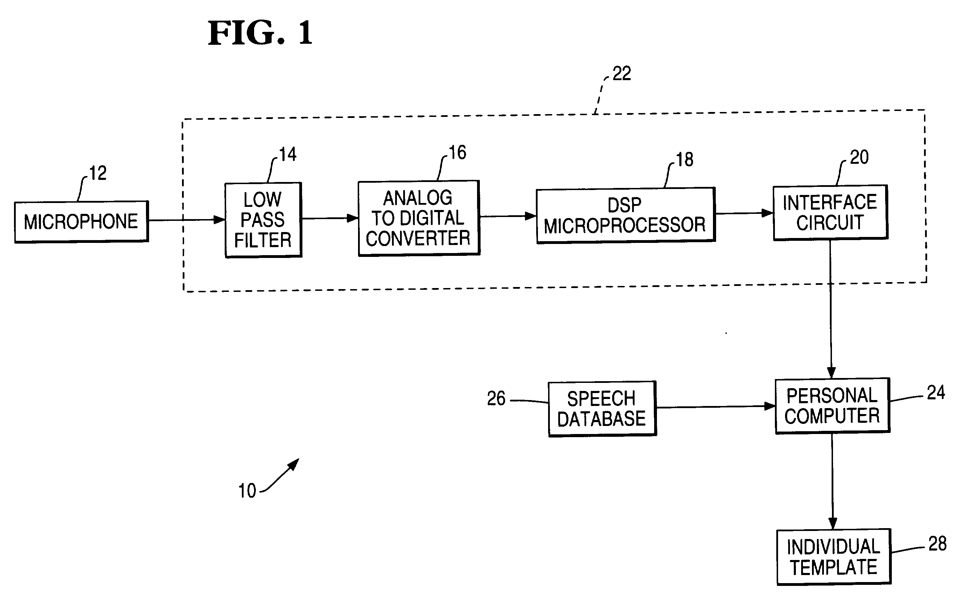

Referring first to Fig.1, there is shown a simplified block diagram of apparatus 10 for forming a template for a speaker. The apparatus 10 includes a microphone 12 connected to a low-pass filter 14 which is connected to an analog-to-digital converter 16. The analog-to-digital converter 16 is connected to a DSP (digital signal processor) microprocessor 18 which is connected to an interface circuit 20. It should be understood that the blocks 14, 16, 18 and 20 are preferably implemented in an interface card 22, shown in dashed outline, which is mounted in a computer 24, which may be a personal computer. The computer 24 contains conventional components such as a keyboard, display, memory and processing devices (not shown) and is connected to a speech database 26 which may be provided on an external disk array (not shown) connected to the computer 24. It will be appreciated that the disk array could, as an alternative, be located at a remote location, and accessed over a network. The contents of the speech database will be described hereinafter. The computer 24 is adapted to produce an individual template 28 (to be described) for the individual speaker speaking into the microphone 12. The template 28, which constitutes reference data for the speaker, may be initially formed on a floppy disk and can then be transferred to a standard size magnetic card or smart card, suitable for the user to carry in customary manner. Alternatively, such a card could contain an address at which the reference data is located in a storage device, if the reference data is too large for inclusion on the card.

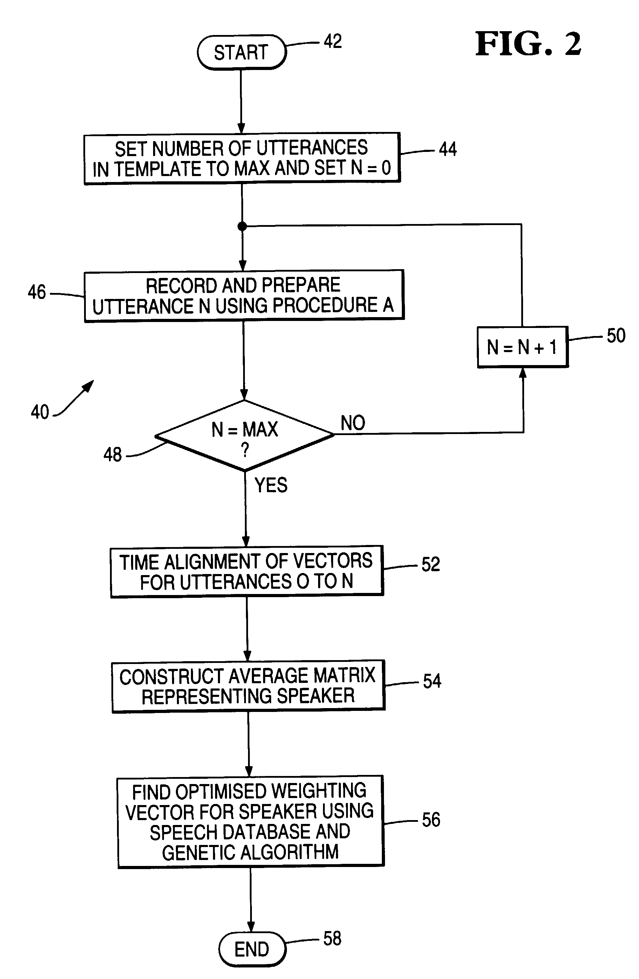

It should be understood that the apparatus shown in Fig.1 is used for enrolment by a speaker, that is, a speaker who wishes to generate a template for embodying in a user's card, speaks a predetermined utterance a plurality of times, into the microphone 12. The resulting utterances are processed in the apparatus 10, to produce reference data in the form of a template. This procedure will now be described with reference to the flowchart 40 shown in Fig.2.

Referring to Fig.2, the flowchart 40 starts at block 42 and proceeds to block 44, where the number of utterances to be utilized in forming the template is designated as MAX, and a counter is set to the value N=O. The first utterance is stored in digital form and then processed according to an analysis procedure, referred to hereinafter as procedure A (to be described), see block 46. The flowchart proceeds to block 48, where a test is made as to whether the value N=MAX. If not, the flowchart proceeds to block 50, where the value of N is increased by unity and block 46 is returned to, thereby causing a new utterance to be processed according to procedure A. The result of procedure A is to produce a matrix of cepstral coefficients (to be explained). The N matrices for the utterances of the speaker are then time aligned by a known procedure, such as dynamic time warping (block 52), and averaged to produce an average matrix of cepstral coefficients, representative of the speaker (block 54). Then, the flowchart proceeds to block 56, where an optimised weighting vector is found (block 56) and the flowchart ends at block 58. The procedure for finding an opitimised weighting utilizes a genetic algorithm and will be described and explained hereinbelow.

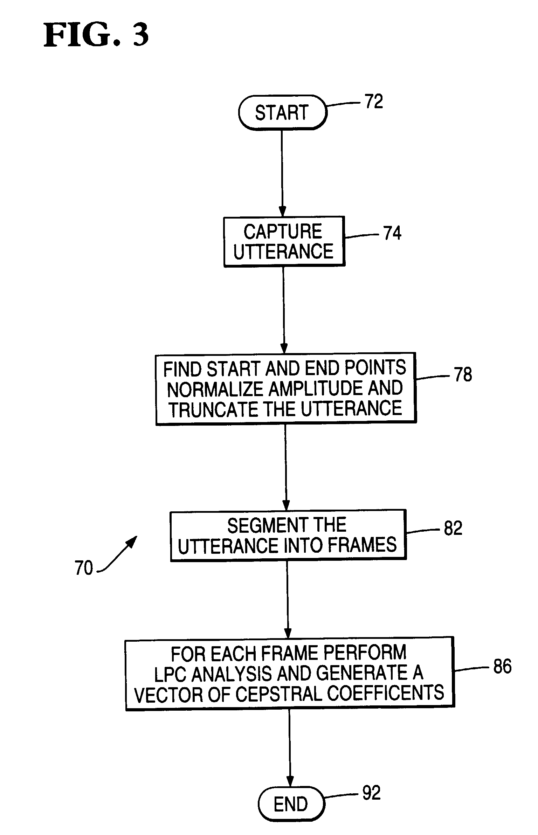

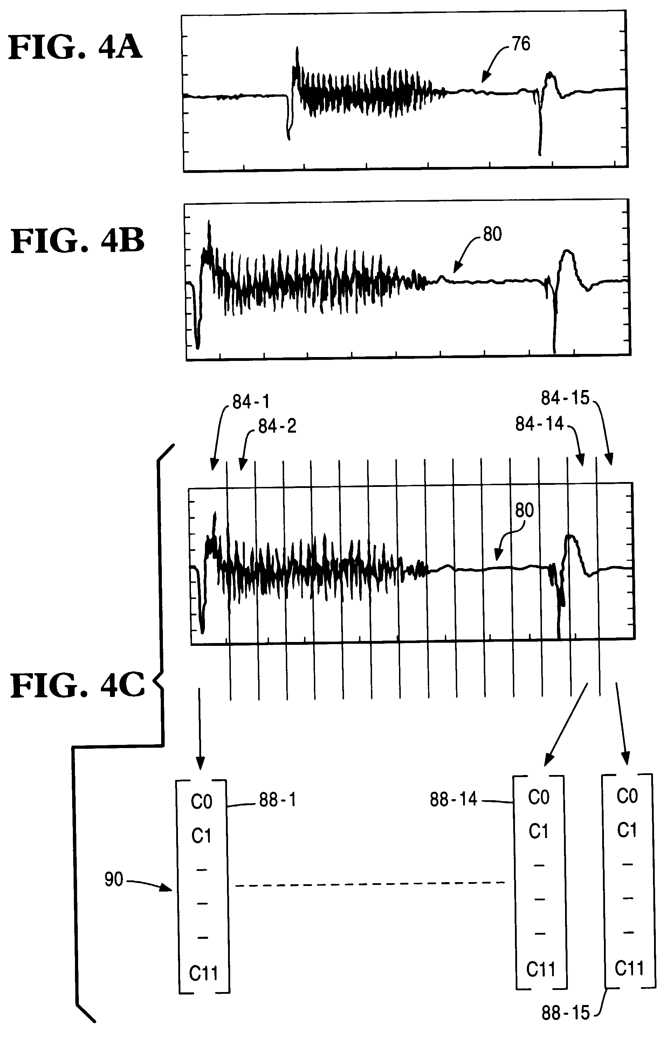

The analysis procedure, referred to as procedure A (block 46, Fig.2), will now be described with reference to Fig.3 and Figs.4A to 4C. Referring to Fig.3, there is shown a flowchart 70 for procedure A. The procedure starts at block 72 and proceeds to block 74, where it is seen that the speaker's utterance is captured. This spoken utterance is illustrated by Fig.4A, it being appreciated that the captured utterance 76 has been converted to digital form in the analog-to-digital converter 16 (Fig. 1). Processing of the utterance is carried out in the DSP microprocessor 18 (Fig.1). Referring to block 78 (Fig.3), the start and end points of the utterance are determined, the amplitude is normalized, and the utterance is translated as shown by utterance 80 in Fig.4B. This processed utterance 80 is then segmented into frames (block 82). As shown in Fig.4C, there are fifteen frames 84 extending across the utterance 80, and referenced as frames 84-1 to 84-15. However, this number of frames is not a limitation and a smaller or greater number of frames may be utilized.

Next, for each frame 84, a spectral analysis operation is performed (block 86) to produce a vector of cepstral coefficients. In the preferred embodiment the spectral analysis operation operates firstly on the frame data to provide a set of linear prediction (LP) coefficients and then by a further mathematical transformation derives a set of cepstral coefficients. The concepts of deriving linear prediction coefficients and cepstral coefficients are known in the speech analysis art. In the preferred embodiment, a 12th order LPC (linear prediction coefficient) analysis is performed, resulting in a vector 88 of twelve cepstral coefficients (CO,C1,....,C11) for each frame 84, following the further mathematical transformation. The vectors are referenced individually as 88-1 to 88-15, and form a matrix 90. Other orders of LPC analysis may be performed, resulting in a different number of cepstral coefficients. Procedure A terminates, as shown, at block 92. It will, of course, be understood that the cepstral coefficients CO,C1......,C11 for the vectors 88 are generally of different value for the respective vectors, but are shown by the same symbols CO,C1,.....,C11 for convenience. Also, it should be understood that cepstral coefficients may be derived by other procedures, for example Fourier transform derived cepstral coefficients may be formed.

Referring briefly to Fig.2, it will be recalled that in block 56 an optimised weighting vector for the speaker is found, using a genetic algorithm. This procedure will now be described. It should first be understood that a principal object of the procedure is to produce an personalised weighting vector for the individual speaker which, in general terms, optimises the difference between the speaker's utterances and the utterances of other speakers, referred to as impostors.

As is known, genetic algorithms are search algorithms for ascertaining values which produce an approach to desired results for a particular function. Genetic algorithms are based on analogies with the mechanics of biological natural selection and natural genetics. They combine a "survival of the fittest" approach with a structural yet randomised information interchange to form a search algorithm.

The present procedure tests the template against a population of a plurality, P, of true utterances, and a plurality, Q, of impostor utterances, utilizing weighting vectors, whose values are progressively changed using a genetic algorithm. The true utterances can be recorded at the same session at which the matrix 90 (Fig.4C) of cepstral vector 88 was obtained as described above, or they can be recorded at a separate session. The impostor utterances are obtained from the speech database 26 (Fig.1).

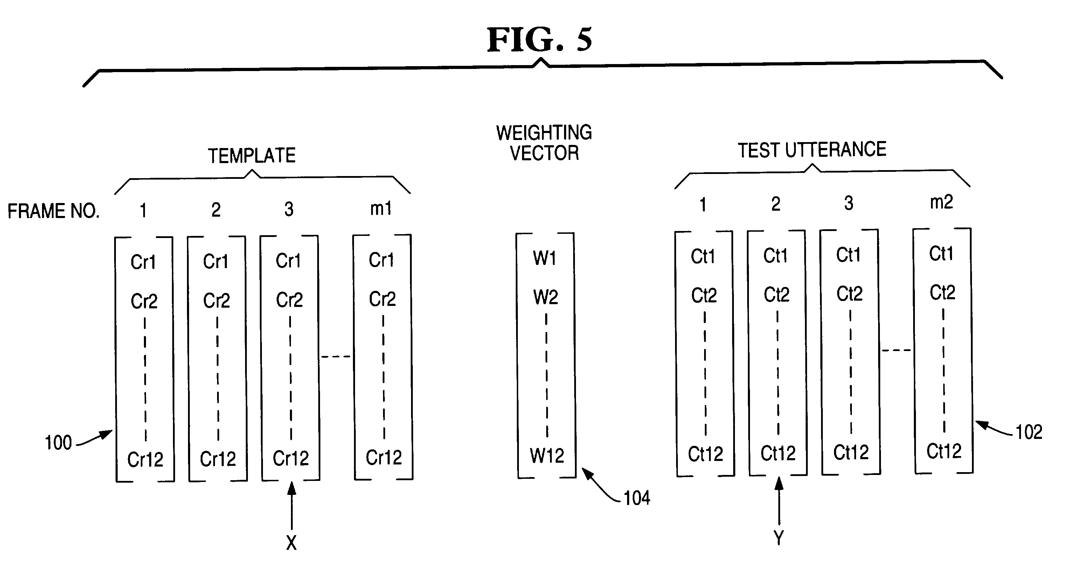

Referring to Fig.5, there is shown the template matrix 100, having a total of ml cepstral coefficient vectors, corresponding to the template matrix 80 of Fig.4C, where ml had the value fifteen. Also shown in Fig.5 is a test utterance, again in the form of a matrix 102 of m2 cepstral coefficient vectors. Furthermore Fig.5 shows a weighting vector 104 having twelve coefficients.

Since the template matrix 100 and the test utterance matrix 102 may have different numbers of frames, i.e. ml and m2 may be different, a dynamic time warping (DTW) algorithm is performed. The DTW algorithm attempts to align frames in the test utterance with the correct frames in the template (each frame being a fixed time interval, and the speech content of the time interval being represented by a vector of cepstral coefficients), as explained hereinabove. The DTW algorithm calculates the expression

$$d = \sum_{i=1}^{12} (c_{ri} - c_{ti})^2,$$

where Cr are the cepstral coefficients representing the reference (template) frame and $C_t$ are the cepstral coefficients representing the test frame. The DTW algorithm calculates a distance measurement between a test frame and a number of template frames in the region of interest. The template frame giving the lowest distance measurement determines the centre point for the next test frame's region of interest. After repeating this process for all frames in the test utterance, a path through the utterance can be found which minimises the distances accumulated over the entire path. This path indicates the correct alignment.

With a view to calculating an enhanced distance measurement between a test frame X and a reference frame Y the expression

$$d_{xy} = \sum_{i=1} w_i (c_{ri} - c_{ti})^2,$$

is now calculated, where wi are the twelve components of a weighting vector W. This expression is calculated for all the vectors of the test utterance, utilizing the corresponding reference vectors identified by the DTW algorithm. Next, all these distances are summed, to form a value $S_1$, referred to as score 1, i.e. for example,

$$S_1 = d_{1,1} + d_{2,2} + d_{3,4} + \cdots + d_{m1,m2}.$$

This total score for the minimum path it is used as a parameter in a fitness distribution (to be explained). In particular the score value is used in the speaker distribution if the test utterance was from a true speaker, and in the imposter distribution if the best utterance come from the speech database, which constitutes an impostor database.

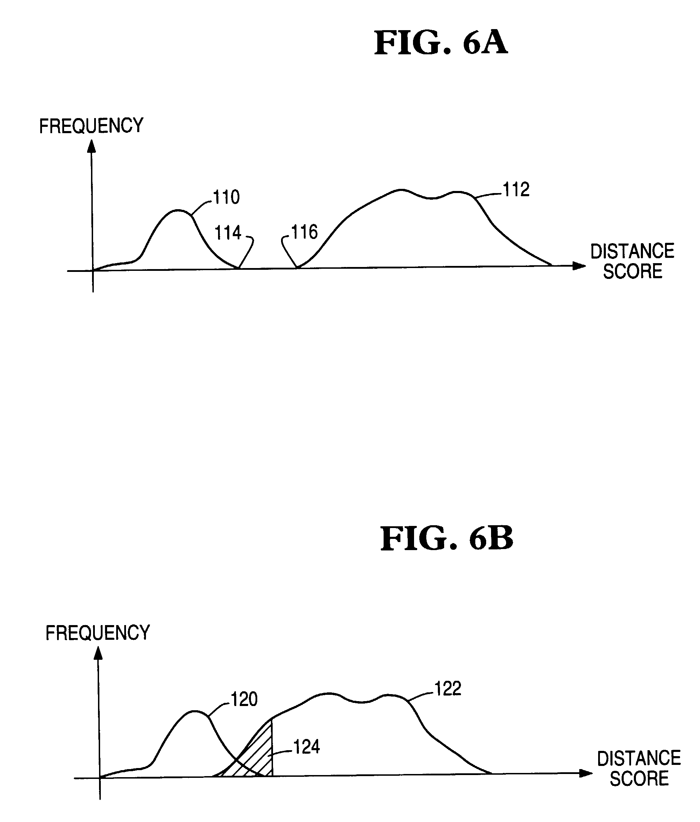

In the manner just described, it will be assumed that a total of P score values are formed for the speaker, forming a true speaker distribution, and a total of Q score values are formed for impostor speakers, forming an impostor distribution. Referring now to Fig.6A there is shown an plot illustrating distance scores (x-axis) against frequency of occurrence (y-axis). The curve 110 represents a distribution of true speaker distance scores and the curve 112 represents a distribution of imposter speaker distance scores. The maximum distance score value 114 for the true speaker distribution 110 is designated Tmax and the minimum distance score value 116 for the impostor distribution 112 is designated Imin. A fitness value F (to be explained) is then calculated from the expression

$$F = 1 - Tmax/(_{2.Imin})$$

In Fig.6A, it is assumed that the true distance scores and the imposter distribution scores are non-overlapping. Referring now to Fig.6B, there are shown a true speaker distribution curve 120 and an impostor speaker distribution curve 122 which overlap. In this situation, the fitness value F is derived differently, namely from the expression

$$F = 0.5 - f/2Q,$$

where Q is the number of impostor trials and f is the number of "failures", that is, the number of times an impostor score lies within the range of true speaker scores, as indicated by the shaded area 124 in Fig.6B. These fitness values F have been found to give good results, but it should be understood that other measures of the separation of the distributions may be used.

The value F for the weighting vector W currently being used is then determined, and stored. As mentioned hereinabove, a genetic algorithm procedure is utilized in the determination of a "best" value for the weighting vector W, i.e. the twelve components $w_i$ of the weighting vector. A brief description of the genetic algorithm will now be presented.

Firstly, each weight $w_i$ of the weighting vector W is encoded as four binary digits, allowing sixteen values (0 to 15). It should, however, be appreciated that other encoding values may be utilized, for example, eight, instead of four, binary digits. All these weights are then concatenated into C*4 bit "chromosomes", where C is the number of cepstral coefficients (C=12 in the preferred embodiment, as described hereinabove). Thus the chromosome length is 48, giving a space for possible weighting vectors of $2^{48}$.

In the implementation of the genetic algorithm, a random population of chromosomes is generated. In the preferred embodiment, being described, a total of 32 such chromosomes are generated. Using each weighting vector in turn, a fitness value F is calculated, using the procedure described hereinabove. A predetermined number of the best of these chromosomes, i.e. those producing the best fitness values F, is then selected, and used to generate a new generation of chromosomes. There are many such procedures possible, but preferably a "crossover" procedure is utilized, wherein pairs of the selected chromosomes in the new generation are selected, and divided into two parts, head and tail, and combined randomly to form a "child" chromosome with a "head" from one parent and a "tail" from the other parent. Furthermore, the new child chromosomes are allowed to "mutate", e.g. one digit can be changed. In the preferred embodiment, a mutation probability of 0.2 was utilized. All the above procedures are standard for genetic algorithms, and are repeated for a predetermined number of generations. A total of 50 generations was used in the preferred embodiment. When this has been carried out, the best performing weighting vector is selected for use in the speaker's template. Thus, the procedure of block 56 (Fig.2) has now been fully described, with the provision of a weighting vector W, having components $w_i$ (i = 1,.., 12 in the preferred embodiment). The weighting vector W is individual to the specific speaker and forms a part of that speaker's template.

Having regard to the foregoing description, it will be appreciated that the speaker enrolment procedure has resulted in the production of a user's card, for example, which has stored therein an average matrix of cepstral coefficients, and the components of the speaker-specific weighting vector, determined using the genetic algorithm procedure just described.

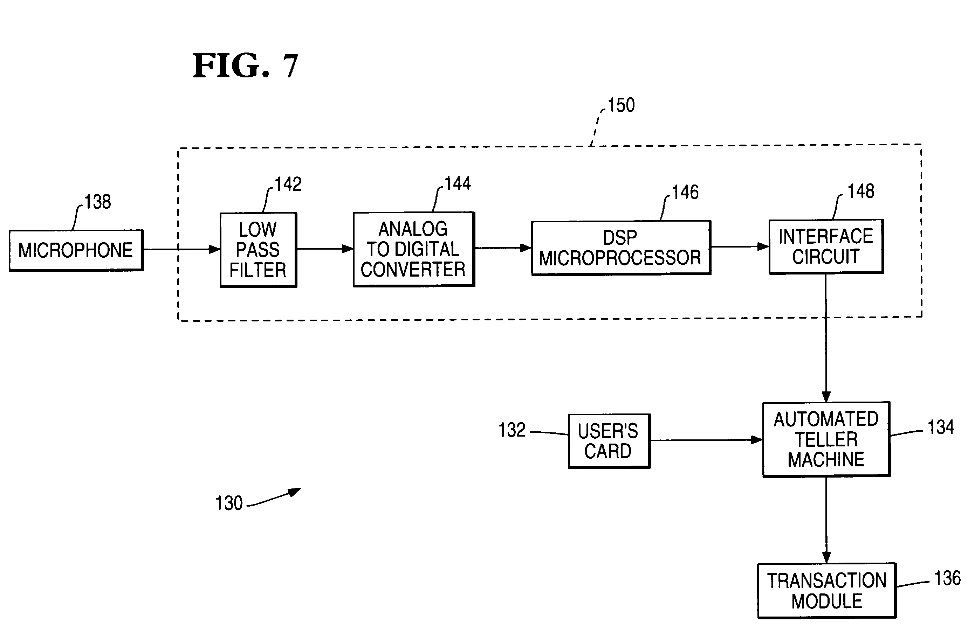

Referring to Fig.7, there is shown in simplified block diagram for the hardware 130 utilized in a typical speaker verification procedure. The user inserts his or her card 132 into a transaction terminal, for example, shown as an automated teller machine (ATM) 134, which has a transaction module 136, such as a cash dispensing module, for example. The user then speaks the predetermined utterance into a microphone 138 located at the ATM. The resulting analog signal is applied to a low-pass filter 142, which is connected to an analog-to-digital converter 144. The analog-to-digital converter 144 is connected to a DSP (digital signal processor) microprocessor 146 which is connected to an interface circuit 148. It should be understood that the blocks 142,144,146 and 148 are preferably implemented in an interface card 150, shown in dashed outline, which is mounted in the ATM 134.

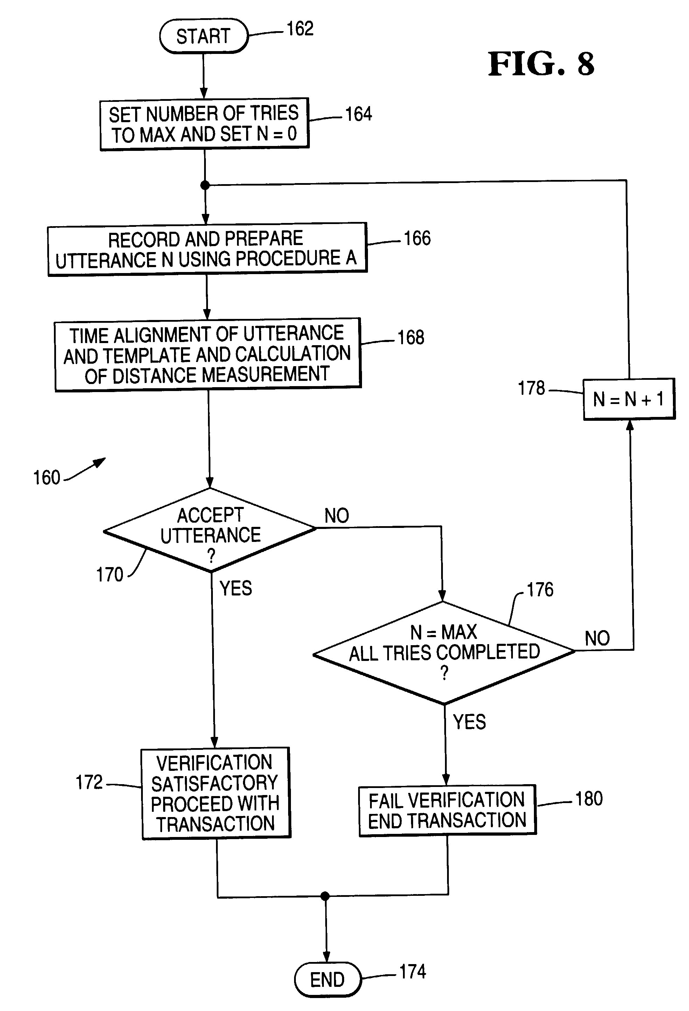

The verification procedure for verifying that the user's utterance spoken into the microphone 138 corresponds with the recorded template reference data on the user's card 132, will now be described with reference to the flowchart 160 shown in Fig.8. The flowchart 160 starts at block 162 and proceeds to block 164. The maximum number of tries which the user is permitted (e.g. three tries) is the value MAX, and a counter value N is set to O; as shown in block 164. As shown in block 166, an utterance of the user, spoken into the microphone 138 (Fig.7) is recorded and processed by processing circuitry shown in Fig.7, using Procedure A, described hereinabove with reference to Fig.3. This results in a matrix of cepstral coefficients for the test utterance. Next, as shown in block 168, a time alignment procedure, preferably the dynamic time warping (DTW) procedure described hereinabove is performed and a distance measurement is calculated between the template reference matrix and the just-calculated test matrix of cepstral coefficients. This distance measurement uses the weighting vector W, whose coefficients $w_i$ (i = 1,..., 12) are read from the user's card 132. This distance measurement is then compared with a predetermined threshold value (block 170). If the distance measurement is less than a predetermined threshold value, the utterance is accepted, the user is deemed to be successfully verified and the ATM transaction is permitted to continue (block 172). The flowchart 160 then terminates as shown at block 174. Returning to decision block 170, if the distance measurement is greater than or equal to the predetermined threshold value, the speaker's trial utterance is not accepted. The flowchart 160 then proceeds to block 176, where a determination is made as to whether the number of tries permitted for the user has reached the maximum value MAX. If not, the count value N is increased by unity (block 178) and the flowchart returns to block 166. If the maximum permitted number of tries has been attained, the verification procedure is deemed to have failed, the attempted transaction is terminated, and the flowchart 160 is terminated as shown in block 174.

In summary, it is found that the use of a genetic algorithm, as described hereinabove, for the determination of a weighting vector to be used in calculating a distance measurement in a speaker verification system achieves very efficient results when such weighting vector is used in a comparison operation, as described, for comparing a trial utterance to be verified against recorded reference parameters previously obtained, derived during a speaker enrolment procedure. An important feature is that the weighting vector is derived individually for each individual speaker being enrolled in the system, and therefore takes account of peculiarities individual to that speaker. For example, some speakers have voices which vary more than others. The system described herein in effect assesses the variability of the speaker's voice.

The preferred embodiment of the invention has been described with particular reference to an ATM. However, it will be understood that the speaker verification system described is applicable also to self-service terminals in general, and to access control systems for access to secure areas.

**Claims**

1. A method of generating reference data for use in a speaker verification system, characterized by the steps of: analyzing a plurality of example utterances of a speaker to be enrolled in said speaker verification system to provide averaged utterance data (100) representing said example utterances, analyzing a plurality of test utterances to provide test utterance data (102) representing said test utterances, and utilizing a genetic algorithm to determine a weighting vector (104) for use in calculating distance measurements between said test utterance data (102) and said averaged utterance data (100).

2. A method according to claim 1, characterized in that said step of analyzing a plurality of utterances of a speaker includes the steps of forming respective matrices of cepstral coefficients representing said utterances, and averaging said matrices to form an averaged matrix (100) of cepstral coefficients, and in that said steps of analyzing a test utterance includes the step of forming a matrix (102) of cepstral coefficients representing said test utterance.

3. A method according to claim 2, characterized in that said cepstral coefficients are derived from linear prediction coefficients representing said utterances.

4. A method according to claim 2 or claim 3, characterized in that said step of analyzing a plurality of utterances includes the steps of generating waveforms (80) representing said utterances, dividing said waveforms into respective pluralities of frames (84) and calculating respective vectors (88) of cepstral coefficients for said frames, whereby the set of cepstrum vectors (88) for each waveform together form a matrix of cepstral coefficients for that waveform.

5. A method according to claim 4, characterized in that said step of analyzing a test utterance includes the step of generating a waveform representing said test utterance, dividing said waveform into a plurality of frames and calculating respective vectors of cepstral coefficient for said frames, whereby the set of cepstrum vectors for the waveform representing said test utterance together form the matrix (102) of cepstral coefficients for the waveform.

6. A method according to claim 5, characterized by the step of aligning the frames representing said test utterance with the frames representing said example utterances.

7. A method according to claim 6, characterized in that said step of aligning includes carrying out a dynamic time warping (DTW) algorithm.

8. A method according to claim 6 or claim 7, characterized by the steps of determining frame distance measurements between aligned frames of said averaged waveform and said test waveform, utilizing a weighting vector and calculating a score value by summing the determined distance measurements.

9. A method according to claim 8, characterized in that said plurality of test utterances includes a plurality of true test utterances derived from said speaker, and a plurality of impostor test utterances derived from other speakers, in that the score values of said true test utterances are collected together to form a true speaker score value distribution (110,120), in that the score values of said impostor test utterances are collected together to form an impostor speaker value distribution (112,122), and in that a fitness value is calculated from said true score value distribution and said impostor score value distribution, for associating with the weighting vector being utilized in said genetic algorithm.

10. A method of verifying a speaker, utilizing reference data generated by a method according to any one of the preceding claims, characterized by the steps of comparing trial utterance data derived from a trial utterance of said speaker with said averaged utterance data, using said weighting vector derived by a genetic algorithm, thereby determining a trial distance measurement between said trial utterance and said averaged utterance data, and comparing said trial distance measurement with a predetermined threshold value.

**FIG. 1**

EP 0 780 830 A2

**FIG. 2**

START — 42

SET NUMBER OF UTTERANCES IN TEMPLATE TO MAX AND SET N = 0 — 44

46 — RECORD AND PREPARE UTTERANCE N USING PROCEDURE A

N = N + 1 — 50

40

48 — $N = MAX$ ? — NO

YES

TIME ALIGNMENT OF VECTORS FOR UTTERANCES O TO N — 52

CONSTRUCT AVERAGE MATRIX REPRESENTING SPEAKER — 54

FIND OPTIMISED WEIGHTING VECTOR FOR SPEAKER USING SPEECH DATABASE AND GENETIC ALGORITHM — 56

END — 58

EP 0 780 830 A2

# FIG. 3

START — 72

CAPTURE UTTERANCE — 74

FIND START AND END POINTS NORMALIZE AMPLITUDE AND TRUNCATE THE UTTERANCE — 78

SEGMENT THE UTTERANCE INTO FRAMES — 82

70

FOR EACH FRAME PERFORM LPC ANALYSIS AND GENERATE A VECTOR OF CEPSTRAL COEFFICENTS — 86

END — 92

9

**FIG. 4A**

**FIG. 4B**

**FIG. 4C**

# FIG. 5

TEMPLATE     WEIGHTING VECTOR     TEST UTTERANCE

FRAME NO.   1   2   3   m1

$Cr1$   $Cr1$   $Cr1$   $Cr1$
$Cr2$   $Cr2$   $Cr2$   $Cr2$
$Cr12$   $Cr12$   $Cr12$   $Cr12$

100

X

$W1$
$W2$
$W12$

104

1   2   3   m2

$Ct1$   $Ct1$   $Ct1$   $Ct1$
$Ct2$   $Ct2$   $Ct2$   $Ct2$
$Ct12$   $Ct12$   $Ct12$   $Ct12$

102

Y

EP 0 780 830 A2

# FIG. 6A

# FIG. 6B

# FIG. 7

MICROPHONE 138

150

LOW PASS FILTER 142 → ANALOG TO DIGITAL CONVERTER 144 → DSP MICROPROCESSOR 146 → INTERFACE CIRCUIT 148

USER'S CARD 132 → AUTOMATED TELLER MACHINE 134

TRANSACTION MODULE 136

130

EP 0 780 830 A2

**FIG. 8**